# EUROPEAN PATENT APPLICATION

(11) **EP 1 947 576 A1**
(43) Date of publication of application: **23.07.2008**
(21) Application number: 07100868.4
(22) Date of filing: 22.01.2007
(51) Int. Cl.: G06F 17/30

(54) **Method for storing media data from a broadcasted media data stream**

(71) Applicant: Deutsche Thomson OHG, 30625 Hannover (DE)
(72) Inventor: Wördemann, Hermes, 31787, Hameln (DE)
(74) Representative: Rittner, Karsten

(57) **Abstract**

The invention is concerned with a method for storing media data from a broadcasted media data stream. The method comprises the steps of receiving (301) reference data (500), receiving media data (400) from the broadcasted media data stream, storing (302) the received media data (400), determining (303) a similarity of the reference data (500) with at least a piece of the stored media data (400) and structuring (304) at least a portion of the stored media data (400) according to the determined similarity (610, 620, 630, 640). By structuring media data stored from the broadcasted media stream according to its similarity with the reference data the user can focus on media data with high similarity and skip media data with low similarity from revision. This shortens the time needed for revision significantly.

## Description

### Background

The invention is concerned with a method for storing media data from a broadcasted media data stream. Storing media data like music, audio books, audio dramas, radio features, TV shows, movies or the like from a media data stream broadcasted analogously on air or via cable is a common technique to achieve copies of a desired piece of media data for private use. This technique becomes more frequently used since virtual broadcasting station began broadcasting over the internet. As the receiving device comprises a storage device and as the media stream is broadcasted digitally storing media data from the media stream can be performed easily.

One way for a user to achieve desired media data from a broadcasted media data stream is to watch or to listen to a broadcasted media data stream until the desired media data is broadcasted and storing it by recording or grabbing it, then. Disadvantageously, this requires the alertness of user during broadcasting time. If the desired media data is broadcasted while the user is occupied with different tasks the user will miss the desired media data. As well, if the desired media data is broadcasted by a different station than the one the user is currently watching or listening to the user will miss the desired media data also.

A way to circumvent the necessity of the user's alertness is storing the entire media data broadcasted by a station during a certain time period. This can be done for several stations in parallel, also. Then, the user can review all the stored entire media data for the desired media data whenever it suits him best. But, as a huge amount of media data accumulates by this method reviewing the stored media data in its entirety on the search for a desired piece of media data may become tremendously time consuming.

### Invention

Thus, there is a need for a method which allows for storing media data from a broadcasted media data stream which supports the user in a search for a desired piece of media data.

This is achieved by a method for storing media data from a broadcasted media data stream comprising the features of claim 1.

The method comprises the steps of receiving reference data, receiving media data from the broadcasted media data stream, storing the received media data, determining a similarity of the reference data with at least a piece of the stored media data and structuring at least a portion of the stored media data according to the determined similarity.

By structuring portions of the media data stored from the broadcasted media stream according to its similarity with the reference data the user can focus on media data portions with high similarity and skip media data portions with low similarity from revision. This shortens the time needed for revision significantly.

Advantageously structuring comprises classifying the portion of the stored media data by help of at least one classification threshold into one of at least two different similarity classes.

If the similarity does not reach the at least one classification threshold the portion of the media data is advantageously discarded. This helps efficient management of storage space.

In another advantageous embodiment structuring comprises setting a flag, creating a pointer to, storing a copy of or relocating the portion of the media data if the similarity reaches or exceeds the at least one classification threshold. Then, retrieval is even easier.

It is considered advantageously that determining similarity comprises determining one or more correlation values. Correlation values are a mean to measure similarity of data.

Determining the similarity may comprise determining a frequency spectrum of at least a piece of the stored media data and a frequency spectrum of reference media data and determining the similarity of the frequency spectra. A frequency spectrum is a suitable parameter set for detecting similarity.

Determining the similarity is simple and fast if the reference data comprises a number of reference values and at least a piece of the stored media data comprises the same number of stored values such that determining the similarity may comprise forming difference values between the first values and the second values.

Advantageously, the method comprises repeating the steps of recording, determining similarity and structuring while the similarity of the stored media data with the reference data does not exceed a stop threshold. Then, it is more likely that the desired piece of media data the reference data is referring to is comprised in the stored media data. The stop threshold may or may not equal the classification threshold.

In yet another advantageous embodiment, the method comprises repeating the steps of recording, determining similarity and structuring for a period of time.

If the stored media data comprises music, the reference data may comprise hummed or sung music and determining the similarity may comprise determining the similarity of said sung or hummed piece of music with at least a piece of the stored music.

If the stored media data comprises audio data and the reference data comprises a fragment of audio data, determining the similarity may comprise determining the similarity of the fragment of audio data with at least a piece of the stored audio data.

Given, the stored media data comprises one or more spoken and/or sung words and the reference data comprises one or more written reference words then determining the similarity may comprise recognizing the one or more spoken and/or sung words and determining the similarity of at least a piece of the recognized words with the one or more reference words.

In a further advantageous embodiment the stored media data comprises music and the reference data comprises one or more written notes such that determining the similarity may comprise recognizing the notes of the music and determining the similarity of at least a piece of the recognized notes with the written notes.

Determining similarity is easier when the stored media data and the reference data comprise at least one tag, each. Determining similarity may than reduce to determining whether the tags are equal.

The invention is further directed to a receiving device for storing media data from a broadcasted media data stream comprising the features of claim 14.

### Drawings

Exemplary embodiments of the invention are illustrated in the drawings and are explained in more detail in the following description.

In the figures:
- Fig. 1: shows an exemplary system adapted to perform the invention;
- Fig. 2: shows a flow chart of an embodiment of the invention;
- Fig. 3: shows a flow chart of a further embodiment if the invention;
- Fig. 4: exemplarily illustrates comparing reference data with stored media data and
- Fig. 5: shows another exemplarily illustration of determining a similarity of reference data with stored media data.

### Exemplary embodiments

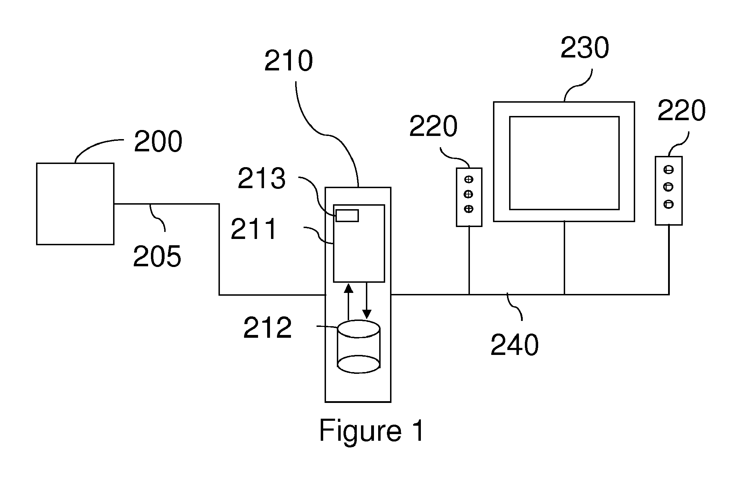

The exemplary system shown in figure 1 is adapted to perform the invention. A broadcasting station 200 generates a media data stream which is broadcasted digitally or analogously via a connection 205 to a receiving device 210. The connection 205 may be formed by cable, the internet and/or a radio link or other suitable means. The receiving device 210 comprises a processing device 211, a storage device 212, for example a hard disk drive or the like and a volatile memory 213 wherein the volatile memory 213 is not necessarily comprised in the processing device 211. The processing device 211 may be adapted to transform an analogously broadcasted media data stream into a digital media data stream. The processing device 211 is further adapted to store an amount of media data from the media data stream in the storage device 212 or in the volatile memory 213. The amount may be determined by help of tags broadcasted as part of the media data stream and indicating the beginning and/or the end of a media data unit, for instance a song, an image, a movie or the like. End and/or beginning of a media data unit may also be determined by analysing media data. For example, detecting a moment of silence, a change in rhythm or a temporarily increased amount of spoken voice may be used for detecting end or beginning of a song.

The portion may also be determined as a portion of fixed temporal duration or a fixed number of media data units. The processing device 211 is further adapted to reload -if necessary- stored media data and/or reference data from the storage device to the volatile memory 213 in order to compare the media data with reference data. The processing device 211 is further adapted to erase media data from the storage device 212 if the comparison yields significant difference between media data and the reference data. The processing device 211 is also adapted to structure media data in the storage device 212 by attaching one or more flags to it, forming a pointer to it, relocating it or the like if the comparison yields a degree of similarity which reaches a high similarity threshold. There is a further exemplary system wherein the media data is kept temporarily in a volatile memory. If the determined similarity with respect to the reference data is sufficient the media is copied to the storage device and erased from the volatile memory, if not it is removed from the volatile memory only. By help of one or more speakers 220 and/or a screen 230 having a connection 240 with the receiving device 210 a user may listen to and/or watch any desired section of the media data stored in the storage device 212 or the volatile memory 213. As well, the user may listen to and/or watch the media data stream in parts or in total while being received.

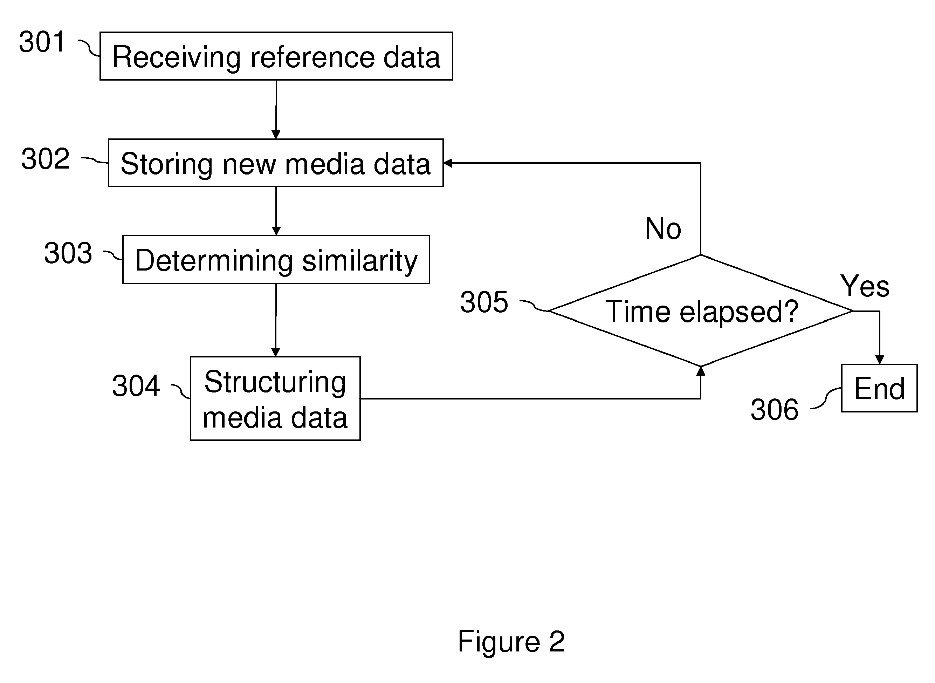

Figure 2 shows a flow chart of an exemplary embodiment of the invention. The method receives reference data 301 from a user, a storage device, another method or any other suitable source. Furthermore, the method stores new media data 302 from a media data stream broadcasted by a broadcasting station. The new media data may comprise one or more media units, for instance, songs, radio features, audio dramas, audio books, news, advertisements and/or comments by a radio show host. If the broadcasting station broadcasts images also the media data units may also consist of one or more images, movies, TV shows, documentary features or the like. The media data units may further comprise one or more tags containing meta information like a title, an artist's name, a genre or a year just to name a few. Depending on the type of desired media data the reference data may comprise, for example, a title, a sung or hummed refrain, a possibly corrupted fragment of music, an image, some written lyrics or notes, an artist's name or any other information suitable for identifying one or more media units.

At least a portion of each media data unit is compared with the reference data in order to determine a similarity 303. If, for instance, the reference data consists of meta information it is sufficient to compare the reference data with the tags. On the other hand, if the reference data is content related the comparison may exclude the tags but comprise comparing the reference data with equally sized slices of the media data unit. Then, the method processes the stored media data in order to structure it according to the determined similarity 304. Structuring may comprise relocating the stored media data unit, creating a pointer to it, adding a flag to it or the like.

The steps of storing, determining similarity and structuring media data are repeated until it is determined in a decisive step 305 that a given period of time is elapsed. Other examples for termination criteria may be the total number of stored media data units or the number of stored media data units with a similarity the reaches a certain threshold wherein the certain threshold may be received separately or together with the reference data, for instance, from a user or another method. If the termination criterion is met, the method ends 306.

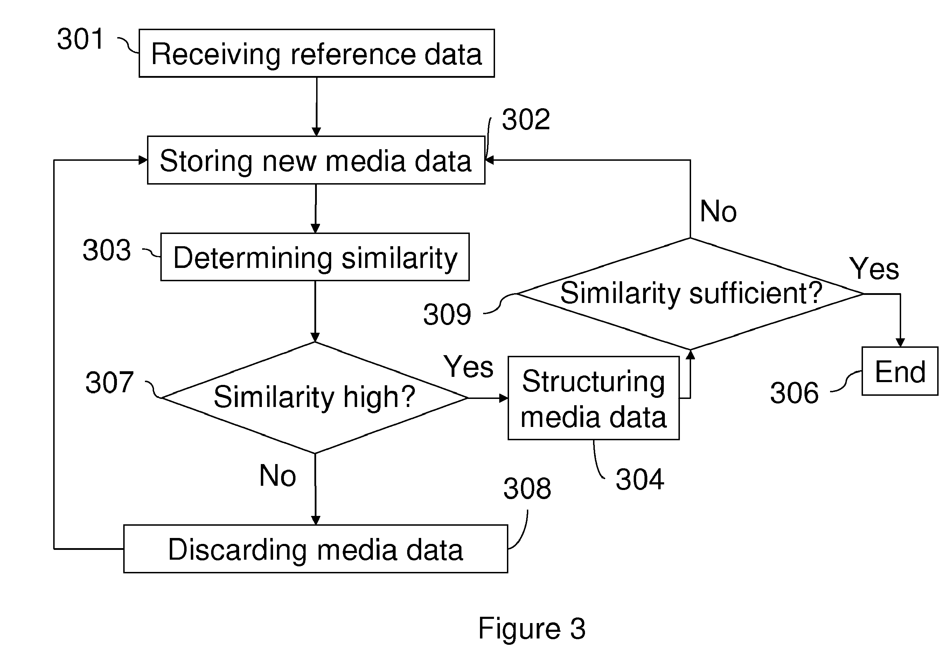

A flow chart of a further exemplary embodiment of the invention is shown in figure 3. Again, the method receives reference data 301, stores new media data 302 from a media data stream broadcasted by a broadcasting station and determines a similarity between at least a portion of the stored media data and the reference data 303. In a decisive step 307 the method checks whether the determined similarity is high e.g. reaches or exceeds a given threshold. If the similarity does not reach the given threshold the stored media data is discarded in step 308 and new media data is stored by returning to step 302. On the other hand, if the similarity is high enough, the stored media data is processed in order to structure it according to the determined similarity 304.

Within this further exemplary embodiment the termination criterion is a stop threshold, which needs to be reached or exceeded by the determined similarity in order to end the method. If the stop threshold is not reached by the determined similarity, the method returns to step 302.

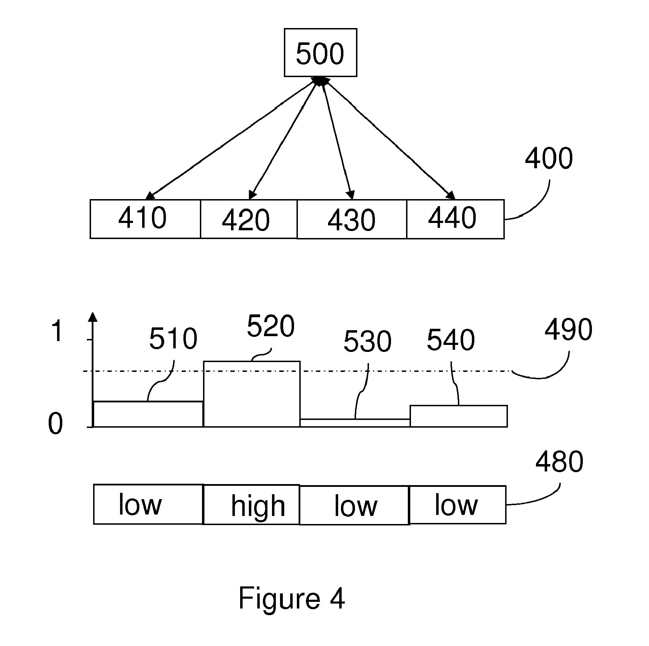

Fig. 4 exemplarily illustrates comparing media data 400 with reference data 500 in order to determine their similarity. The media data 400 comprises several media data units 410, 420, 430, 440. For each media data unit 410, 420, 430, 440 a similarity value 510, 520, 530 or 540, respectively, is determined. The similarity value 510, 520, 530, 540 is zero if the reference data and the media data unit do not have any feature in common. If the reference data and the portion of the media data unit used for comparison match each other the similarity value is one. Similarity values between zero and one reflect that there was some degree of consistency between the reference data 500 and the respective media data unit 410, 420, 430, 440. A flag vector 480 is created which comprises for each of the media data units 410, 420, 430, 440 a flag. The flags reflect the determined degree of similarity. Within this example, the flag is high if the corresponding similarity reaches or exceeds a classification threshold 490 and low otherwise. But, there may be several classification thresholds and the flags may take intermediate positions, also.

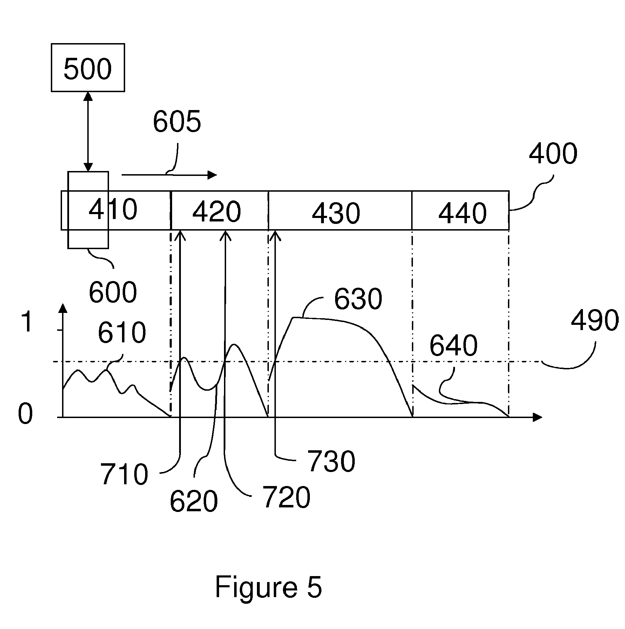

Figure 5 shows another illustration of determining a similarity of reference data with stored media data. A sliding window 600 slides in direction 605 from left to right over the stored media data 400. For each media data unit 410, 420, 430, 440 a similarity curve 610, 620, 630, 640 is calculated. While sliding over one of the media data units 410, 420, 430, 440 the content of the slice or portion of one of the media data units 410, 420, 430, 440 contained in the sliding window 600 at a position is compared with the content of the reference data 500. The comparison yields a degree of similarity which forms the value of the respective similarity curve 610, 620, 630, 640 at said position. The comparison may be based on a correlation function, a frequency spectra analysis, a difference function or any other suitable mean for determining similarity. As the reference data 500 may contain written notes, lyrics or text, while the media data units 410, 420, 430, 440 contain music or sung or spoken words determining the degree of similarity may comprise recognizing the notes from the music and/or the sung or spoken words. Then, determining the similarity may comprise determining a reliability of the respective recognition result i.e. a probability that the respective recognition result is correct.

As the sliding window 600 slides on at some point the sliding window 600 contains sections from two media data units 410, 420, 430, 440. Then, only the section of the media data unit 410, 420, 430, 440 on the left is considered in determination of a degree of similarity. The amount of this section decreases as the sliding window 600 slides on. Therefore, each of the similarity curves 610, 620, 630, 640 drops to zero at its right hand limit. As media data units 410, 420, 430, 440 are sometimes broadcasted with fading in and fading out, a continuous similarity curve over the entire media data 400 may be determined. Then, even if the sliding window 600 contains sections from two or more media data units 410, 420, 430, 440 the comparison is performed as if the sliding window contains only a slice or portion of one media data unit 410, 420, 430, 440.

Whenever one of the similarity curves 610, 620, 630, 640 reaches or exceeds the classification threshold 490 a pointer 710, 720, 730 is introduced pointing at the corresponding position of the sliding window 600. When reviewing the storing results a user can jump to the portions of the media units 410, 420, 430, 440 which revealed sufficient similarity with the reference data 500 by help of said pointers 710, 720, 730.

## Claims

1. Method for storing media data (400) from a broadcasted media data stream comprising:
- receiving (301) reference data (500),
- receiving media data (400) from the broadcasted media data stream,
- storing (302) the received media data (400),
- determining (303) a similarity of the reference data (500) with at least a piece of the stored media data (400) and
- structuring (304) at least a portion of the stored media data (400) according to the determined similarity (510, 520, 530, 540, 610, 620, 630, 640).

2. Method according to claim 1 wherein
- structuring (304) comprises classifying the portion of the stored media data (400) into one of at least two different similarity classes by comparing the determined similarity (510, 520, 530, 540, 610, 620, 630, 640) with at least one classification threshold (490).

3. Method according to claim 2 wherein
- structuring (304) comprises discarding the portion of the stored media data (400) if the determined similarity (510, 520, 530, 540, 610, 620, 630, 640) does not reach any of the at least one classification threshold (490).

4. Method according to claim 2 or 3 wherein
- structuring (304) comprises setting a flag, creating a pointer to, storing a copy of or relocating the portion of the stored media data (400) if the determined similarity (510, 520, 530, 540, 610, 620, 630, 640) reaches or exceeds all of the at least one classification threshold (490).

5. Method according to any of the preceding claims wherein
- determining the similarity (303) comprises determining one or more correlation values.

6. Method according to any of the preceding claims wherein
- determining the similarity (303) comprises determining a frequency spectrum of at least a piece of the stored media data (400) and a frequency spectrum of the reference media data and determining the similarity of the frequency spectra.

7. Method according to any of the preceding claims wherein
- the reference data (500) comprises a number of reference values,
- at least a piece of the stored media data (400) comprises the same number of stored values and
- determining the similarity (303) comprises forming difference values between the first values and the second values.

8. Method according to any of the preceding claims, the method further comprising
- repeating the steps of storing (302), determining the similarity (303) and structuring (304) until the entire stored media data (400) comprises media data for which the determined similarity (510, 520, 530, 540, 610, 620, 630, 640) reaches or exceeds a stop threshold (309).

9. Method according to any of the preceding claims, the method further comprising
- repeating the steps of storing (302), determining the similarity (303) and structuring (304) for a period of time (305).

10. Method according to any of the preceding claims wherein
- the stored media data (400) comprises music,
- the reference data (500) comprises a sung or hummed piece of music and
- determining the similarity (303) comprises determining the similarity (510, 520, 530, 540, 610, 620, 630, 640) of said sung or hummed piece of music with at least a piece of the stored music.

11. Method according to any of the preceding claims wherein
- the stored media data (400) comprises audio data,
- the reference data (500) comprises a fragment of audio data and
- determining the similarity (303) comprises determining the similarity (510, 520, 530, 540, 610, 620, 630, 640) of said fragment of audio data with at least a piece of the stored audio data.

12. Method according to any of the preceding claims wherein
- the stored media data (400) comprises one or more spoken and/or sung words,
- the reference data (500) comprises one or more written reference words and
- determining the similarity (303) comprises recognizing the one or more spoken and/or sung words and determining the similarity (510, 520, 530, 540, 610, 620, 630, 640) of at least a piece of the recognized words with the reference words.

13. Method according to any of the preceding claims wherein
- the stored media data (400) comprises music,
- the reference data (500) comprises one or more written notes and
- determining the similarity (303) comprises recognizing the notes of the music and determining the similarity (510, 520, 530, 540, 610, 620, 630, 640) of at least a piece of the recognized notes with the written notes.

14. Method according to any of the preceding claims wherein
- the stored media data (400) and the reference data (500) comprise at least one tag, each, and
- determining the similarity (303) comprises determining whether the tags are equal.

15. Receiving device (210) for storing media data (400) from a broadcasted media data stream said receiving device (210) comprises:
- means for receiving of reference data (500) and
- means for receiving of media data (400) from the broadcasted media data stream, and
- a storage device (212, 213) adapted for storing the received media data (400) and the received reference data and connected to a processing device (212) which is adapted
- for determining of a similarity of the reference data (500) with at least a piece of the stored media data (400) and
- for structuring at least a portion of the stored media data (400) according to the determined similarity (510, 520, 530, 540, 610, 620, 630, 640).
